# EUROPEAN PATENT APPLICATION

(11) **EP 4 095 486 A1**
(43) Date of publication of application: **30.11.2022**
(21) Application number: 22167494.8
(22) Date of filing: 08.04.2022
(51) Int. Cl.: G01C 21/20, G05D 1/02

(54) **SYSTEMS AND METHODS FOR NAVIGATING A ROBOT USING SEMANTIC MAPPING**

(30) Priority: 11.05.2021 US 202117317103
(71) Applicant: X Development LLC, Mountain View, CA 94043 (US)
(72) Inventor: QI, Chengzhi, Mountain View, 94043 (US); LU, Ting, Mountain View, 94043 (US)
(74) Representative: Anderson, Oliver Ben

(57) **Abstract**

A method includes obtaining a semantic map of an environment of a robot, where the semantic map comprises representations of a plurality of semantic landmarks in the environment, where each semantic landmark is assigned one or more association criteria based on a semantic type of the semantic landmark. The method further includes obtaining sensor data indicative of the environment. The method also includes identifying, based on the sensor data, a plurality of candidate landmarks for localization of the robot. The method additionally includes associating a candidate landmark of the plurality of candidate landmarks with a semantic landmark of the plurality of semantic landmarks from the semantic map based on application of the one or more association criteria assigned to the candidate landmark. The method further includes localizing the robot in the environment based on the candidate landmark associated with the semantic landmark.

## Description

### BACKGROUND

An environment of a robot may include one or more objects that serve as landmarks for use in navigating the robot. Data from a sensor on the robot can be used for localizing the robot within the environment by providing a representation of detected landmarks in the environment. Based on comparing locations of landmarks detected from the sensor data to mapped landmarks, a location of the robot can be determined. Landmarks used for localization may move, may be removed from the environment, or may be added to the environment, which can render a map of landmarks less accurate. In turn, an estimated location and pose of the robot determined using the map may be less accurate.

### SUMMARY

Example embodiments involve navigating a robot in an environment. A computing device within the robot can be configured to detect candidate landmarks in an environment and compare the candidate landmarks to a semantic map. Example embodiments further relate to leveraging semantic landmarks to localize the robot for purposes of navigating the robot.

In an embodiment, a method is provided. The method includes obtaining a semantic map of an environment of a robot, where the semantic map comprises representations of a plurality of semantic landmarks in the environment, where each semantic landmark of the plurality of semantic landmarks is assigned one or more association criteria based on a semantic type of the semantic landmark. The method further includes obtaining, by at least one sensor of the robot, sensor data indicative of the environment. The method also includes identifying, based on the sensor data, a plurality of candidate landmarks for localization of the robot. The method additionally includes associating a candidate landmark of the plurality of candidate landmarks with a semantic landmark of the plurality of semantic landmarks from the semantic map based on application of the one or more association criteria assigned to the candidate landmark. The method further includes localizing the robot in the environment based on the candidate landmark associated with the semantic landmark.

In another embodiment, a system is provided. The system includes a sensor and a computing device comprising one or more processors, a non-transitory computer readable medium, and program instructions stored on the non-transitory computer readable medium. The program instructions are executable by the one or more processors to obtain a semantic map of an environment of a robot, where the semantic map comprises representations of a plurality of semantic landmarks in the environment, where each semantic landmark of the plurality of semantic landmarks is assigned one or more association criteria based on a semantic type of the semantic landmark. The program instructions are further executable to obtain, using the sensor, sensor data indicative of the environment. The program instructions are additionally executable to identify, based on the sensor data, a plurality of candidate landmarks for localization of the robot. The program instructions are also executable to associate a candidate landmark of the plurality of candidate landmarks with a semantic landmark of the plurality of semantic landmarks from the semantic map based on application of the one or more association criteria assigned to the candidate landmark. The program instructions are further executable to localize the robot in the environment based on the candidate landmark associated with the semantic landmark.

In a further embodiment, a non-transitory computer readable medium is provided. The non-transitory computer readable medium has stored therein instructions executable by one or more processors to cause a computing system to perform functions. The functions include obtaining a semantic map of an environment of a robot, where the semantic map comprises representations of a plurality of semantic landmarks in the environment, where each semantic landmark of the plurality of semantic landmarks is assigned one or more association criteria based on a semantic type of the semantic landmark. The functions further include obtaining, by at least one sensor of the robot, sensor data indicative of the environment. The functions additionally include identifying, based on the sensor data, a plurality of candidate landmarks for localization of the robot. The functions also include associating a candidate landmark of the plurality of candidate landmarks with a semantic landmark of the plurality of semantic landmarks from the semantic map based on application of the one or more association criteria assigned to the candidate landmark. The functions additionally include localizing the robot in the environment based on the candidate landmark associated with the semantic landmark.

In another embodiment, a system is provided. The system includes means for obtaining a semantic map of an environment of a robot, where the semantic map comprises representations of a plurality of semantic landmarks in the environment, where each semantic landmark of the plurality of semantic landmarks is assigned one or more association criteria based on a semantic type of the semantic landmark. The system further includes means for obtaining, by at least one sensor of the robot, sensor data indicative of the environment. The system also includes means for identifying, based on the sensor data, a plurality of candidate landmarks for localization of the robot. The system additionally includes means for associating a candidate landmark of the plurality of candidate landmarks with a semantic landmark of the plurality of semantic landmarks from the semantic map based on application of the one or more association criteria assigned to the candidate landmark. The system further includes means for localizing the robot in the environment based on the candidate landmark associated with the semantic landmark.

The foregoing summary is illustrative only and is not intended to be in any way limiting. In addition to the illustrative aspects, embodiments, and features described above, further aspects, embodiments, and features will become apparent by reference to the figures and the following detailed description and the accompanying drawings.

### BRIEF DESCRIPTION OF THE DRAWINGS

Figure 1 illustrates a configuration of a robotic system, in accordance with example embodiments.
Figure 2 illustrates a mobile robot, in accordance with example embodiments.
Figure 3 illustrates an exploded view of a mobile robot, in accordance with example embodiments.
Figure 4 illustrates a robotic arm, in accordance with example embodiments.
Figure 5A is a block diagram of a control system, in accordance with example embodiments.
Figure 5B is a pose graph, in accordance with example embodiments.
Figure 6A illustrates a robot navigating within an environment, in accordance with example embodiments.
Figure 6B illustrates a first semantic map of an environment, in accordance with example embodiments.
Figure 6C illustrates a second semantic map of an environment, in accordance with example embodiments.
Figure 7A illustrates a robot detecting a portion of a candidate landmark at a first time, in accordance with example embodiments.
Figure 7B illustrates a robot detecting a portion of a candidate landmark at a second time, in accordance with example embodiments.
Figure 7C illustrates a robot detecting a portion of a candidate landmark at a third time, in accordance with example embodiments.
Figure 8 is a block diagram of a system training a machine learning model, in accordance with example embodiments.
Figure 9 is a block diagram of a method, in accordance with example embodiments.

### DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless indicated as such. Other embodiments can be utilized, and other changes can be made, without departing from the scope of the subject matter presented herein.

Thus, the example embodiments described herein are not meant to be limiting. It will be readily understood that the aspects of the present disclosure, as generally described herein, and illustrated in the figures, can be arranged, substituted, combined, separated, and designed in a wide variety of different configurations.

Throughout this description, the articles "a" or "an" are used to introduce elements of the example embodiments. Any reference to "a" or "an" refers to "at least one," and any reference to "the" refers to "the at least one," unless otherwise specified, or unless the context clearly dictates otherwise. The intent of using the conjunction "or" within a described list of at least two terms is to indicate any of the listed terms or any combination of the listed terms.

The use of ordinal numbers such as "first," "second," "third" and so on is to distinguish respective elements rather than to denote a particular order of those elements. For the purposes of this description, the terms "multiple" and "a plurality of' refer to "two or more" or "more than one."

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment. In the figures, similar symbols typically identify similar components, unless context dictates otherwise. Further, unless otherwise noted, figures are not drawn to scale and are used for illustrative purposes only. Moreover, the figures are representational only and not all components are shown. For example, additional structural or restraining components might not be shown.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

### Overview

Example embodiments may include or otherwise relate to methods and systems for localizing and navigating a robot within an environment. In particular, the methods and systems relate to automatically identifying semantic landmarks for use in localizing and navigating robots.

When navigating within an environment, a robot may use a sensor (e.g., a LIDAR device) to detect objects in the environment. Some objects may be dispersed within the environment that can be used as landmarks for use in localizing and navigating the robot. For example, in a home or office environment, bins, shelves, door frames, baseboards, exit signs, and window frames may be available for use as semantic landmarks for localization. In order to leverage these objects, a computing device (e.g., a controller of a robot) identifies the objects and maps them. After mapping, detected objects can be compared to mapped objects to localize and navigate the robot. However, changing locations of these objects, removing objects, or adding objects within the environment can impact the accuracy of localization. For example, a navigation module of a robot may mistake the robot's location in the environment based on a new object that incorrectly matches with a mapped object (e.g., a false positive). Further, certain types of objects might not allow for accurate or confident localization. For example, each baseboard might be aligned in similar patterns and different faces of each baseboard may appear the same, thereby making it difficult to localize based on the positions of each baseboard.

Within examples, objects having asymmetric geometries, (e.g., sorting stations, storage bins, or waste bins) can be used as landmarks. These geometries can be used to determine relative poses of each object in addition to the location of each object. This may allow for fewer detected objects to provide a reliable localization estimate. Further, leveraging known geometries of objects assists in confidently identifying an object by detecting an expected portion of the object during multiple successive scans as a robot moves within the environment.

Within examples, a semantic map of objects can be used for localizing and navigating robots within the environment. The semantic map tracks each object that is classified as a particular type of landmark, and stores relative locations and poses of each object. For example, nodes and edges can be used to represent each object in the semantic map. The nodes and edges can be embedded in a graph optimization model that outputs a connected pose graph. As a robot moves within the environment and detects objects, a robot trajectory is connected via the landmark nodes, which forms a sparse connected pose graph. This may assist in ensuring accurate trajectory estimation while navigating the robot within the environment.

Within examples, generating the semantic map may involve training a machine learning model by scanning an environment multiple times. Objects of a certain type that are intended to be added to the semantic map may include visual identifiers (e.g., QR codes or bar codes) that serve as ground truth while training the model. Within examples, the machine learning model may have a confidence level associated with it based on comparing detections using the model to detections using the visual identifier. This process can be repeated for multiple types of objects to provide more robust and accurate semantic landmark detection. Improved landmark detection may allow for the generation of a more robot and accurate semantic map, in which similar objects are represented relative to one another. More specifically, the detections may be treated as constraints and may be used to formulate a pose graph. A map may be generated by solving the pose graph. Pointcloud measurements may be aggregated to voxel/surfel grids for alignment. The optimized pose of landmark nodes may then be used to register landmark objects.

Within examples, each type of semantic landmark in a semantic map includes one or more association criteria. As used herein, the term "association criteria" refers to one or more baseline characteristics that a candidate landmark should have in order to be recognized as a given type of semantic landmark. For example, association criteria can include one or more of surface geometries, colors, reflectivity levels, locations within an environment, orientations within the environment, proximity to one or more objects, visible alphanumeric or symbolic characters, and/or other features on objects that are detectable using sensor data. The association criteria may be learned features from a machine learned model such as a neural network. The association criteria may therefore be high dimensional features that are not human-explainable. Each type of semantic landmark may have a set of association criteria that is unique to that type of landmark (e.g., a combination of surface geometries, colors, etc.). As a robot navigates within the environment, candidate landmarks can be vetted using sets of association criteria to determine whether any candidate landmarks correspond to a semantic landmark type. Within examples, candidate landmarks that do not match with any association criteria can be ignored for purposes of localization. For example, a first candidate landmark corresponding to a sorting station that matches association criteria of a mapped semantic landmark may be used for localizing the robot, while a second candidate landmark corresponding to a postbox may be omitted from use when localizing the robot. When mapping the environment, the robot or a computing device associated with the robot can identify objects with one or more unique criteria that are frequently detected. If association criteria for a given landmark type consistently result in a confirmed detection (e.g., verified with a ground truth), the landmarks of the semantic type can be added to the map. In this manner a semantic map can be built that includes reliable association criteria that are unique to a given type of object

In some examples, a map may include both landmarks (semantic information) and a voxel and/or surfel map (with aggregated point cloud information). By leveraging both types of information, results may be more accurate than by using either type of information alone. Landmarks may not be always available. In particular, landmarks sometimes may be sparsely distributed depending on a building's construction (e.g., when the robot is facing a corner, no landmark may be observable). Additionally, sufficient landmarks may not yet be available when mapping a new building. Accordingly, it may be advantageous to sometimes rely on aligning a point cloud to a voxel/surfel map, since a point cloud may always be available. Furthermore, while a single landmark can be used to localize the robot, more landmarks may be leveraged to improve accuracy when available. The point cloud may be aligned with the voxel/surfel map after an estimation of the robot pose is obtained from the landmark(s) to refine the pose estimation. A control system which detects landmarks may therefore also aggregate point clouds and accumulate them in voxel/surfel grids such that the robot can align new point clouds to updated grids during localization.

Reference will now be made in detail to various embodiments, examples of which are illustrated in the accompanying drawings. In the following detailed description, numerous specific details are set forth in order to provide a thorough understanding of the present disclosure and the described embodiments. However, the present disclosure may be practiced without these specific details. In other instances, well-known methods, procedures, and components, and circuits have not been described in detail so as not to unnecessarily obscure aspects of the embodiments.

### Example Robotic Systems

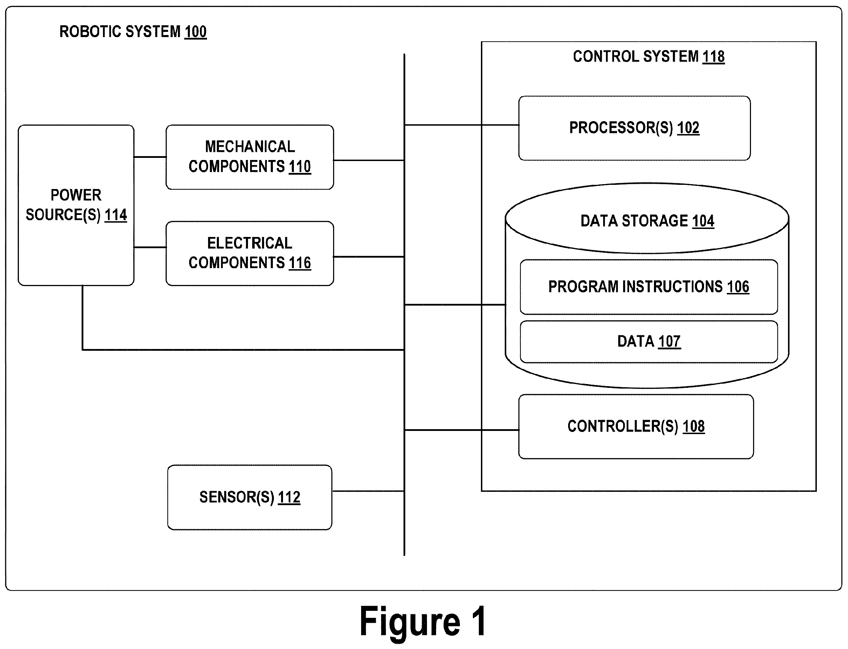

Figure 1 illustrates an example configuration of a robotic system that may be used in connection with the implementations described herein. Robotic system 100 may be configured to operate autonomously, semi-autonomously, or using directions provided by user(s). Robotic system 100 may be implemented in various forms, such as a robotic arm, industrial robot, or some other arrangement. Some example implementations involve a robotic system 100 engineered to be low cost at scale and designed to support a variety of tasks. Robotic system 100 may be designed to be capable of operating around people. Robotic system 100 may also be optimized for machine learning. Throughout this description, robotic system 100 may also be referred to as a robot, robotic device, or mobile robot, among other designations.

As shown in Figure 1, robotic system 100 may include processor(s) 102, data storage 104, and controller(s) 108, which together may be part of control system 118. Robotic system 100 may also include sensor(s) 112, power source(s) 114, mechanical components 110, and electrical components 116. Nonetheless, robotic system 100 is shown for illustrative purposes, and may include more or fewer components. The various components of robotic system 100 may be connected in any manner, including wired or wireless connections. Further, in some examples, components of robotic system 100 may be distributed among multiple physical entities rather than a single physical entity. Other example illustrations of robotic system 100 may exist as well.

Processor(s) 102 may operate as one or more general-purpose hardware processors or special purpose hardware processors (e.g., digital signal processors, application specific integrated circuits, etc.). Processor(s) 102 may be configured to execute computer-readable program instructions 106, and manipulate data 107, both of which are stored in data storage 104. Processor(s) 102 may also directly or indirectly interact with other components of robotic system 100, such as sensor(s) 112, power source(s) 114, mechanical components 110, or electrical components 116.

Data storage 104 may be one or more types of hardware memory. For example, data storage 104 may include or take the form of one or more computer-readable storage media that can be read or accessed by processor(s) 102. The one or more computer-readable storage media can include volatile or non-volatile storage components, such as optical, magnetic, organic, or another type of memory or storage, which can be integrated in whole or in part with processor(s) 102. In some implementations, data storage 104 can be a single physical device. In other implementations, data storage 104 can be implemented using two or more physical devices, which may communicate with one another via wired or wireless communication. As noted previously, data storage 104 may include the computer-readable program instructions 106 and data 107. Data 107 may be any type of data, such as configuration data, sensor data, or diagnostic data, among other possibilities.

Controller(s) 108 may include one or more electrical circuits, units of digital logic, computer chips, or microprocessors that are configured to (perhaps among other tasks), interface between any combination of mechanical components 110, sensor(s) 112, power source(s) 114, electrical components 116, control system 118, or a user of robotic system 100. In some implementations, controller(s) 108 may be a purpose-built embedded device for performing specific operations with one or more subsystems of the robotic system 100.

Control system 118 may monitor and physically change the operating conditions of robotic system 100. In doing so, control system 118 may serve as a link between portions of robotic system 100, such as between mechanical components 110 or electrical components 116. In some instances, control system 118 may serve as an interface between robotic system 100 and another computing device. Further, control system 118 may serve as an interface between robotic system 100 and a user. In some instances, control system 118 may include various components for communicating with robotic system 100, including a joystick, buttons, or ports, etc. The example interfaces and communications noted above may be implemented via a wired or wireless connection, or both. Control system 118 may perform other operations for robotic system 100 as well.

During operation, control system 118 may communicate with other systems of robotic system 100 via wired or wireless connections, and may further be configured to communicate with one or more users of the robot. As one possible illustration, control system 118 may receive an input (e.g., from a user or from another robot) indicating an instruction to perform a requested task, such as to pick up and move an object from one location to another location. Based on this input, control system 118 may perform operations to cause the robotic system 100 to make a sequence of movements to perform the requested task. As another illustration, a control system may receive an input indicating an instruction to move to a requested location. In response, control system 118 (perhaps with the assistance of other components or systems) may determine a direction and speed to move robotic system 100 through an environment en route to the requested location.

Operations of control system 118 may be carried out by processor(s) 102. Alternatively, these operations may be carried out by controller(s) 108, or a combination of processor(s) 102 and controller(s) 108. In some implementations, control system 118 may partially or wholly reside on a device other than robotic system 100, and therefore may at least in part control robotic system 100 remotely.

Mechanical components 110 represent hardware of robotic system 100 that may enable robotic system 100 to perform physical operations. As a few examples, robotic system 100 may include one or more physical members, such as an arm, an end effector, a head, a neck, a torso, a base, and wheels. The physical members or other parts of robotic system 100 may further include actuators arranged to move the physical members in relation to one another. Robotic system 100 may also include one or more structured bodies for housing control system 118 or other components, and may further include other types of mechanical components. The particular mechanical components 110 used in a given robot may vary based on the design of the robot, and may also be based on the operations or tasks the robot may be configured to perform.

In some examples, mechanical components 110 may include one or more removable components. Robotic system 100 may be configured to add or remove such removable components, which may involve assistance from a user or another robot. For example, robotic system 100 may be configured with removable end effectors or digits that can be replaced or changed as needed or desired. In some implementations, robotic system 100 may include one or more removable or replaceable battery units, control systems, power systems, bumpers, or sensors. Other types of removable components may be included within some implementations.

Robotic system 100 may include sensor(s) 112 arranged to sense aspects of robotic system 100. Sensor(s) 112 may include one or more force sensors, torque sensors, velocity sensors, acceleration sensors, position sensors, proximity sensors, motion sensors, location sensors, load sensors, temperature sensors, touch sensors, depth sensors, ultrasonic range sensors, infrared sensors, object sensors, or cameras, among other possibilities. Within some examples, robotic system 100 may be configured to receive sensor data from sensors that are physically separated from the robot (e.g., sensors that are positioned on other robots or located within the environment in which the robot is operating).

Sensor(s) 112 may provide sensor data to processor(s) 102 (perhaps by way of data 107) to allow for interaction of robotic system 100 with its environment, as well as monitoring of the operation of robotic system 100. The sensor data may be used in evaluation of various factors for activation, movement, and deactivation of mechanical components 110 and electrical components 116 by control system 118. For example, sensor(s) 112 may capture data corresponding to the terrain of the environment or location of nearby objects, which may assist with environment recognition and navigation.

In some examples, sensor(s) 112 may include RADAR (e.g., for long-range object detection, distance determination, or speed determination), LIDAR (e.g., for short-range object detection, distance determination, or speed determination), SONAR (e.g., for underwater object detection, distance determination, or speed determination), VICON^{®} (e.g., for motion capture), one or more cameras (e.g., stereoscopic cameras for 3D vision), a global positioning system (GPS) transceiver, or other sensors for capturing information of the environment in which robotic system 100 is operating. Sensor(s) 112 may monitor the environment in real time, and detect obstacles, elements of the terrain, weather conditions, temperature, or other aspects of the environment. In another example, sensor(s) 112 may capture data corresponding to one or more characteristics of a target or identified object, such as a size, shape, profile, structure, or orientation of the object.

Further, robotic system 100 may include sensor(s) 112 configured to receive information indicative of the state of robotic system 100, including sensor(s) 112 that may monitor the state of the various components of robotic system 100. Sensor(s) 112 may measure activity of systems of robotic system 100 and receive information based on the operation of the various features of robotic system 100, such as the operation of an extendable arm, an end effector, or other mechanical or electrical features of robotic system 100. The data provided by sensor(s) 112 may enable control system 118 to determine errors in operation as well as monitor overall operation of components of robotic system 100.

As an example, robotic system 100 may use force/torque sensors to measure load on various components of robotic system 100. In some implementations, robotic system 100 may include one or more force/torque sensors on an arm or end effector to measure the load on the actuators that move one or more members of the arm or end effector. In some examples, the robotic system 100 may include a force/torque sensor at or near the wrist or end effector, but not at or near other joints of a robotic arm. In further examples, robotic system 100 may use one or more position sensors to sense the position of the actuators of the robotic system. For instance, such position sensors may sense states of extension, retraction, positioning, or rotation of the actuators on an arm or end effector.

As another example, sensor(s) 112 may include one or more velocity or acceleration sensors. For instance, sensor(s) 112 may include an inertial measurement unit (IMU). The IMU may sense velocity and acceleration in the world frame, with respect to the gravity vector. The velocity and acceleration sensed by the IMU may then be translated to that of robotic system 100 based on the location of the IMU in robotic system 100 and the kinematics of robotic system 100.

Robotic system 100 may include other types of sensors not explicitly discussed herein. Additionally or alternatively, the robotic system may use particular sensors for purposes not enumerated herein.

Robotic system 100 may also include one or more power source(s) 114 configured to supply power to various components of robotic system 100. Among other possible power systems, robotic system 100 may include a hydraulic system, electrical system, batteries, or other types of power systems. As an example illustration, robotic system 100 may include one or more batteries configured to provide charge to components of robotic system 100. Some of mechanical components 110 or electrical components 116 may each connect to a different power source, may be powered by the same power source, or be powered by multiple power sources.

Any type of power source may be used to power robotic system 100, such as electrical power or a gasoline engine. Additionally or alternatively, robotic system 100 may include a hydraulic system configured to provide power to mechanical components 110 using fluid power. Components of robotic system 100 may operate based on hydraulic fluid being transmitted throughout the hydraulic system to various hydraulic motors and hydraulic cylinders, for example. The hydraulic system may transfer hydraulic power by way of pressurized hydraulic fluid through tubes, flexible hoses, or other links between components of robotic system 100. Power source(s) 114 may charge using various types of charging, such as wired connections to an outside power source, wireless charging, combustion, or other examples.

Electrical components 116 may include various mechanisms capable of processing, transferring, or providing electrical charge or electric signals. Among possible examples, electrical components 116 may include electrical wires, circuitry, or wireless communication transmitters and receivers to enable operations of robotic system 100. Electrical components 116 may interwork with mechanical components 110 to enable robotic system 100 to perform various operations. Electrical components 116 may be configured to provide power from power source(s) 114 to the various mechanical components 110, for example. Further, robotic system 100 may include electric motors. Other examples of electrical components 116 may exist as well.

Robotic system 100 may include a body, which may connect to or house appendages and components of the robotic system. As such, the structure of the body may vary within examples and may further depend on particular operations that a given robot may have been designed to perform. For example, a robot developed to carry heavy loads may have a wide body that enables placement of the load. Similarly, a robot designed to operate in tight spaces may have a relatively tall, narrow body. Further, the body or the other components may be developed using various types of materials, such as metals or plastics. Within other examples, a robot may have a body with a different structure or made of various types of materials.

The body or the other components may include or carry sensor(s) 112. These sensors may be positioned in various locations on the robotic system 100, such as on a body, a head, a neck, a base, a torso, an arm, or an end effector, among other examples.

Robotic system 100 may be configured to carry a load, such as a type of cargo that is to be transported. In some examples, the load may be placed by the robotic system 100 into a bin or other container attached to the robotic system 100. The load may also represent external batteries or other types of power sources (e.g., solar panels) that the robotic system 100 may utilize. Carrying the load represents one example use for which the robotic system 100 may be configured, but the robotic system 100 may be configured to perform other operations as well.

As noted above, robotic system 100 may include various types of appendages, wheels, end effectors, gripping devices and so on. In some examples, robotic system 100 may include a mobile base with wheels, treads, or some other form of locomotion. Additionally, robotic system 100 may include a robotic arm or some other form of robotic manipulator. In the case of a mobile base, the base may be considered as one of mechanical components 110 and may include wheels, powered by one or more of actuators, which allow for mobility of a robotic arm in addition to the rest of the body.

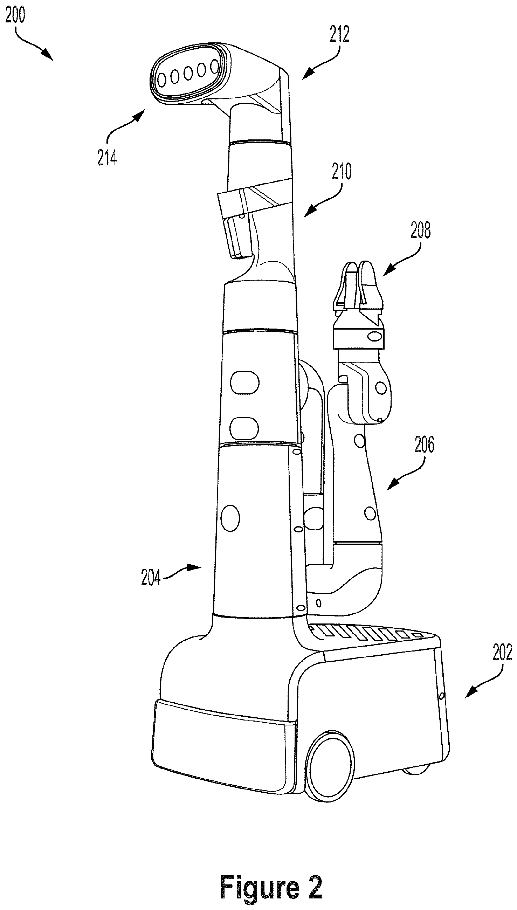

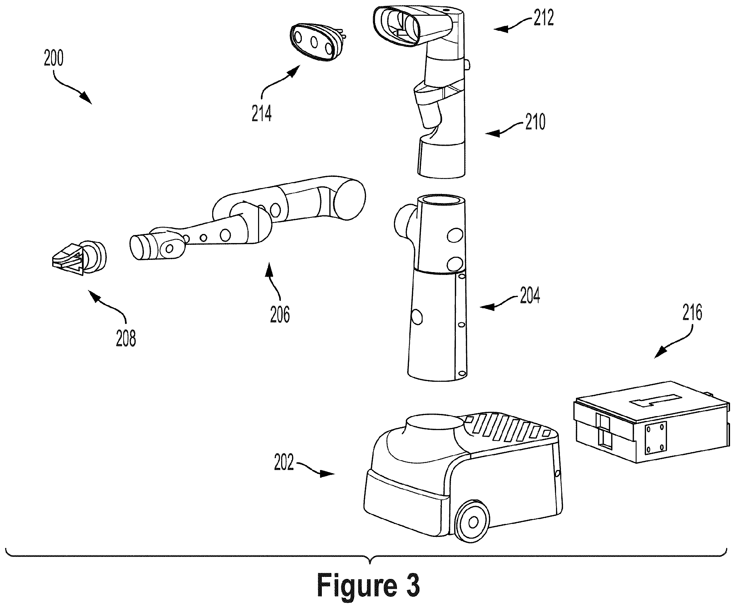

Figure 2 illustrates a mobile robot, in accordance with example embodiments. Figure 3 illustrates an exploded view of the mobile robot, in accordance with example embodiments. More specifically, a robot 200 may include a mobile base 202, a midsection 204, an arm 206, an end-of-arm system (EOAS) 208, a mast 210, a perception housing 212, and a perception suite 214. The robot 200 may also include a computing box 216 stored within mobile base 202.

The mobile base 202 includes two drive wheels positioned at the front end of the robot 200 in order to provide locomotion to robot 200. The mobile base 202 also includes additional casters (not shown) to facilitate motion of the mobile base 202 over a ground surface. The mobile base 202 may have a modular architecture that allows compute box 216 to be easily removed. Compute box 216 may serve as a removable control system for robot 200 (rather than a mechanically integrated control system). After removing external shells, the computing box 216 can be easily removed and/or replaced. The mobile base 202 may also be designed to allow for additional modularity. For example, the mobile base 202 may also be designed so that a power system, a battery, and/or external bumpers can all be easily removed and/or replaced.

The midsection 204 may be attached to the mobile base 202 at a front end of the mobile base 202. The midsection 204 includes a mounting column which is fixed to the mobile base 202. The midsection 204 additionally includes a rotational joint for arm 206. More specifically, the midsection 204 includes the first two degrees of freedom for arm 206 (a shoulder yaw J0 joint and a shoulder pitch J1 joint). The mounting column and the shoulder yaw J0 joint may form a portion of a stacked tower at the front of mobile base 202. The mounting column and the shoulder yaw J0 joint may be coaxial. The length of the mounting column of midsection 204 may be chosen to provide the arm 206 with sufficient height to perform manipulation tasks at commonly encountered height levels (e.g., coffee table top and countertop levels). The length of the mounting column of midsection 204 may also allow the shoulder pitch J1 joint to rotate the arm 206 over the mobile base 202 without contacting the mobile base 202.

The arm 206 may be a 7DOF robotic arm when connected to the midsection 204. As noted, the first two DOFs of the arm 206 may be included in the midsection 204. The remaining five DOFs may be included in a standalone section of the arm 206 as illustrated in Figures 2 and 3. The arm 206 may be made up of plastic monolithic link structures. Inside the arm 206 may be housed standalone actuator modules, local motor drivers, and thru bore cabling.

The EOAS 208 may be an end effector at the end of arm 206. EOAS 208 may allow the robot 200 to manipulate objects in the environment. As shown in Figures 2 and 3, EOAS 208 may be a gripper, such as an underactuated pinch gripper. The gripper may include one or more contact sensors such as force/torque sensors and/or non-contact sensors such as one or more cameras to facilitate object detection and gripper control. EOAS 208 may also be a different type of gripper such as a suction gripper or a different type of tool such as a drill or a brush. EOAS 208 may also be swappable or include swappable components such as gripper digits.

The mast 210 may be a relatively long, narrow component between the shoulder yaw J0 joint for arm 206 and perception housing 212. The mast 210 may be part of the stacked tower at the front of mobile base 202. The mast 210 may be fixed relative to the mobile base 202. The mast 210 may be coaxial with the midsection 204. The length of the mast 210 may facilitate perception by perception suite 214 of objects being manipulated by EOAS 208. The mast 210 may have a length such that when the shoulder pitch J1 joint is rotated vertical up, a topmost point of a bicep of the arm 206 is approximately aligned with a top of the mast 210. The length of the mast 210 may then be sufficient to prevent a collision between the perception housing 212 and the arm 206 when the shoulder pitch J1 joint is rotated vertical up.

As shown in Figures 2 and 3, the mast 210 may include a 3D LIDAR sensor configured to collect depth information about the environment. The 3D LIDAR sensor may be coupled to a carved-out portion of the mast 210 and fixed at a downward angle. The LIDAR position may be optimized for localization, navigation, and for front cliff detection.

The perception housing 212 may include at least one sensor making up perception suite 214. The perception housing 212 may be connected to a pan/tilt control to allow for reorienting of the perception housing 212 (e.g., to view objects being manipulated by EOAS 208). The perception housing 212 may be a part of the stacked tower fixed to the mobile base 202. A rear portion of the perception housing 212 may be coaxial with the mast 210.

The perception suite 214 may include a suite of sensors configured to collect sensor data representative of the environment of the robot 200. The perception suite 214 may include an infrared(IR)-assisted stereo depth sensor. The perception suite 214 may additionally include a wide-angled red-green-blue (RGB) camera for human-robot interaction and context information. The perception suite 214 may additionally include a high resolution RGB camera for object classification. A face light ring surrounding the perception suite 214 may also be included for improved human-robot interaction and scene illumination. In some examples, the perception suite 214 may also include a projector configured to project images and/or video into the environment.

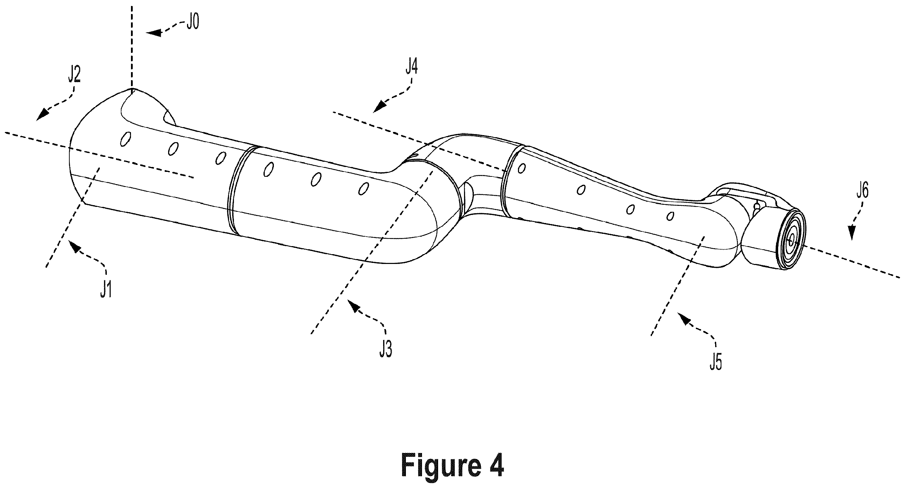

Figure 4 illustrates a robotic arm, in accordance with example embodiments. The robotic arm includes 7 DOFs: a shoulder yaw J0 joint, a shoulder pitch J1 joint, a bicep roll J2 joint, an elbow pitch J3 joint, a forearm roll J4 joint, a wrist pitch J5 joint, and wrist roll J6 joint. Each of the joints may be coupled to one or more actuators. The actuators coupled to the joints may be operable to cause movement of links down the kinematic chain (as well as any end effector attached to the robot arm).

The shoulder yaw J0 joint allows the robot arm to rotate toward the front and toward the back of the robot. One beneficial use of this motion is to allow the robot to pick up an object in front of the robot and quickly place the object on the rear section of the robot (as well as the reverse motion). Another beneficial use of this motion is to quickly move the robot arm from a stowed configuration behind the robot to an active position in front of the robot (as well as the reverse motion).

The shoulder pitch J1 joint allows the robot to lift the robot arm (e.g., so that the bicep is up to perception suite level on the robot) and to lower the robot arm (e.g., so that the bicep is just above the mobile base). This motion is beneficial to allow the robot to efficiently perform manipulation operations (e.g., top grasps and side grasps) at different target height levels in the environment. For instance, the shoulder pitch J1 joint may be rotated to a vertical up position to allow the robot to easily manipulate objects on a table in the environment. The shoulder pitch J1 joint may be rotated to a vertical down position to allow the robot to easily manipulate objects on a ground surface in the environment.

The bicep roll J2 joint allows the robot to rotate the bicep to move the elbow and forearm relative to the bicep. This motion may be particularly beneficial for facilitating a clear view of the EOAS by the robot's perception suite. By rotating the bicep roll J2 joint, the robot may kick out the elbow and forearm to improve line of sight to an object held in a gripper of the robot.

Moving down the kinematic chain, alternating pitch and roll joints (a shoulder pitch J1 joint, a bicep roll J2 joint, an elbow pitch J3 joint, a forearm roll J4 joint, a wrist pitch J5 joint, and wrist roll J6 joint) are provided to improve the manipulability of the robotic arm. The axes of the wrist pitch J5 joint, the wrist roll J6 joint, and the forearm roll J4 joint are intersecting for reduced arm motion to reorient objects. The wrist roll J6 point is provided instead of two pitch joints in the wrist in order to improve object rotation.

In some examples, a robotic arm such as the one illustrated in Figure 4 may be capable of operating in a teach mode. In particular, teach mode may be an operating mode of the robotic arm that allows a user to physically interact with and guide the robotic arm towards carrying out and recording various movements. In a teaching mode, an external force is applied (e.g., by the user) to the robotic arm based on a teaching input that is intended to teach the robot regarding how to carry out a specific task. The robotic arm may thus obtain data regarding how to carry out the specific task based on instructions and guidance from the user. Such data may relate to a plurality of configurations of mechanical components, joint position data, velocity data, acceleration data, torque data, force data, and power data, among other possibilities.

During teach mode the user may grasp onto the EOAS or wrist in some examples or onto any part of the robotic arm in other examples, and provide an external force by physically moving the robotic arm. In particular, the user may guide the robotic arm towards grasping onto an object and then moving the object from a first location to a second location. As the user guides the robotic arm during teach mode, the robot may obtain and record data related to the movement such that the robotic arm may be configured to independently carry out the task at a future time during independent operation (e.g., when the robotic arm operates independently outside of teach mode). In some examples, external forces may also be applied by other entities in the physical workspace such as by other objects, machines, or robotic systems, among other possibilities.

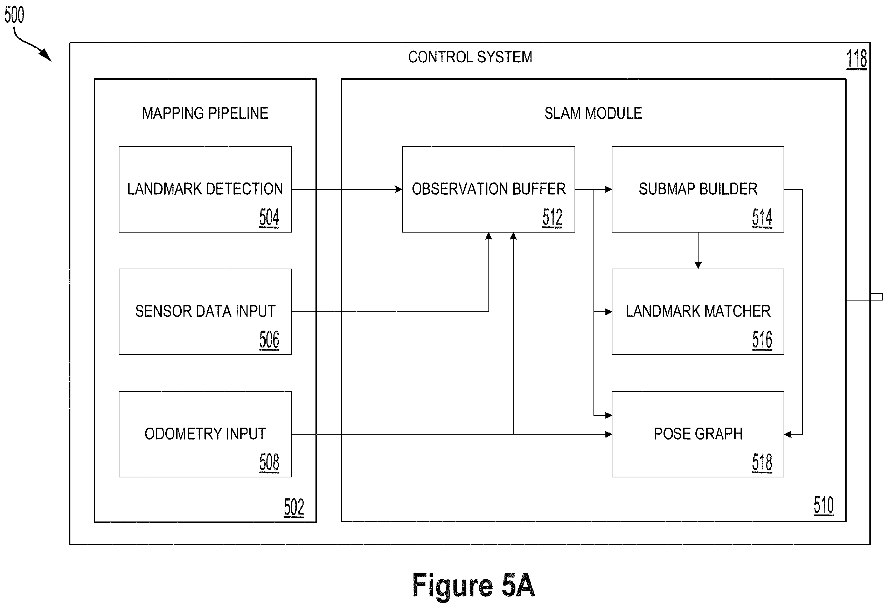

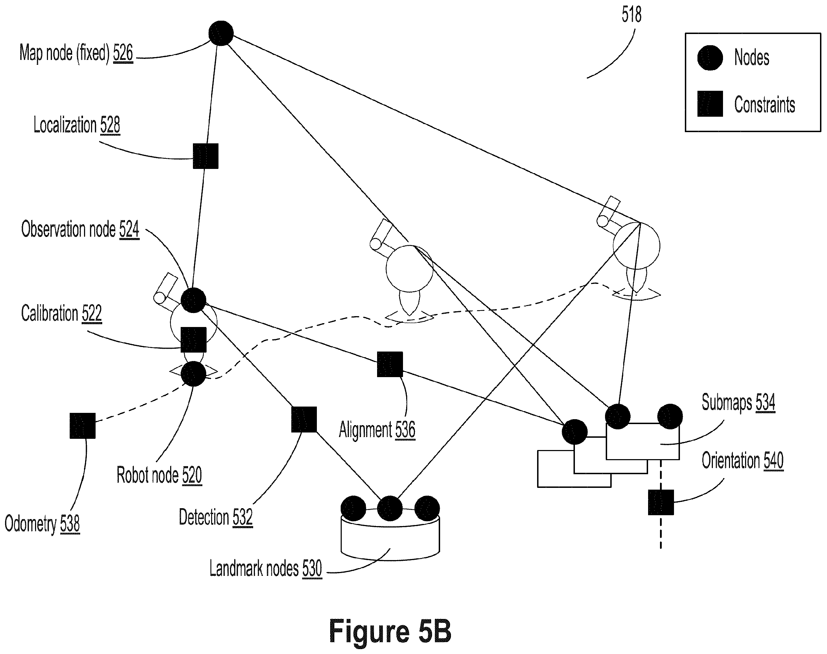

Figure 5A is a block diagram of a control system, in accordance with example embodiments. In particular, Figure 5 shows submodules of control system 118 described above with respect to Figure 1. Control system 118 includes a mapping pipeline 502 and a simultaneous localization and mapping (SLAM) module 510.

Mapping pipeline 502 includes a landmark detection module 504. For example, landmark detection module 504 may include a set of program instructions used for detecting landmarks in an environment of the robot. For example, landmark detection module 504 may specify parameters and techniques for extracting features from LIDAR data, image data, or other data obtained by sensors of the robot, and using the extracted features to detect landmarks in the environment. Mapping pipeline 502 further includes a sensor data input 506. For example, sensor data input 506 may receive sensor data from the sensor(s) 112 described in Figure 1. In particular, LIDAR data, image data, and other sensor data from robotic system 100 can be provided to the mapping pipeline 502 at sensor data input 506. Mapping pipeline 502 further includes an odometry input 508, which receives odometry data from an odometer of the robot. As described further with respect to SLAM module 510, the odometry data can serve as a constraint when localizing the robot. In some examples, odometry data and inertial measurement unit (IMU) data may be bundled together to build a constraint because they both provide delta motion of the robot between two different timestamps.

SLAM module 510 includes an observation buffer module 512. Observation buffer module 512 may include a set of instructions that control how landmark detections and sensor data are used for generating a submap of the environment. For example, sensor data from sensor data input 506 can be downsampled and synchronized to minimize error terms passed on to other submodules of SLAM module 510.

SLAM module 510 further includes a submap builder module 514. Submap builder module 514 aggregates observation information received from observation buffer module 512, provides an alignment method for a pose (e.g., location and orientation) update of the robot, and updates records of semantic landmarks in the submap. For example, submap builder module 514 may confirm locations and orientations of mapped semantic landmarks detected by landmark detection module 504, may confirm semantic landmark types for each object (e.g., define a landmark category for an object or identify an object as being a non-landmark type object), and maintains a grid of voxels (or a set of surfels) which is used to aggregate the point cloud measurement.

SLAM module 510 further includes landmark matcher module 516. Landmark matcher module 516 includes a set of instructions that maintain a prior pose of each mapped semantic landmark, and compares detected candidate landmarks to the mapped semantic landmarks. For example, landmark matcher module 516 may use one or more association criteria for each type of semantic landmark to determine if a given candidate landmark matches a type of semantic landmark. If a landmark matches a type of semantic landmark and matches (within a threshold level of matching) a pose of a mapped landmark, a record of the mapped landmark can be updated with a current pose and a most recent detection time. If a candidate landmark matches a type of semantic landmark and does not match a pose of a mapped landmark, the candidate landmark can be added to the map and assigned a unique identifier (UID) for reference by SLAM module 510 in future scans of the environment. If no candidate landmark is identified to match with a mapped landmark, a record of the mapped landmark can be updated to indicate that the mapped landmark has potentially been removed from the environment or repositioned within the environment. For example, while landmarks may be chosen that are not expected to be moved or removed intentionally, if sorting stations, waste bins, or other landmark types are moved or removed from the environment, their poses in the submap may be updated.

SLAM module 510 further includes a pose graph module 518. The pose graph module 518 receives inputs from submap builder module 514, landmark matcher module 516, observation buffer module 512, and odometry input 508 to maintain a graph representation of nodes and edges that represent mapped landmarks in the submap. Pose graph module 518 embeds the nodes and edges into a graph optimization model that outputs a pose graph of the semantic landmarks, and more particularly, of the robot in relation to the semantic landmarks. For example, this may involve generating a sparse connected pose graph based on associating candidate landmarks with one or more semantic landmarks. The sparse connected pose graph represents a trajectory of the robot relative to the semantic landmarks. The trajectory of the robot may be represented relative to a map frame of the map. In this manner, a trajectory of the robot can be determined based on information generated from mapping pipeline 502 and from additional submodules of SLAM module 510, and can be provided to a trajectory planning module for navigating the robot.

Figure 5B is a pose graph, in accordance with example embodiments. More specifically, Figure 5B illustrates pose graph 518 which may be built and maintained by control system 500 from Figure 5A. The pose graph 518 includes nodes (illustrated as circles) as well as constraints (illustrated as squares).

The nodes may represent center points of objects. In particular, robot node 520 may represent the robot base center, observation node 524 may represent the center of a robot sensor, and landmark nodes 530 may represent center points of individual landmarks in an environment. Constraints may represent relative poses between nodes, illustrated in the pose graph 518 as edges between nodes. For instance, one or more calibration constraints 522 may be used to constrain the pose of a robot sensor relative to the robot base. Moreover, one or more detection constraints 532 may be used to constrain the robot pose and/or robot sensor pose relative to each of one or more landmarks represented as landmark nodes 530. Odometry constrain 538 may additionally be used to constrain the robot pose and/or robot sensor pose at different timestamps as the robot moves within the environment.

The pose graph 518 additionally includes map node 526, which may represent a fixed map of an environment of the robot. A localization constraint 528 may be used to constrain the robot pose and/or robot sensor pose relative to the map of the environment. The pose graph 518 further includes submap nodes 534, which each may represent a different submap of the environment. Each submap may comprise a grid of voxels (or a set of surfels) representing surfaces in a portion of the environment. An alignment constraint 536 may be used to constrain the robot pose and/or robot sensor pose relative to one of the submaps represented by submap nodes 534. Orientation constraints 540 may be further used to constrain the orientation of submaps relative to each other. The pose graph 518 is provided for illustrative purposes. More, fewer, and/or different nodes and/or constraints may be used in further examples.

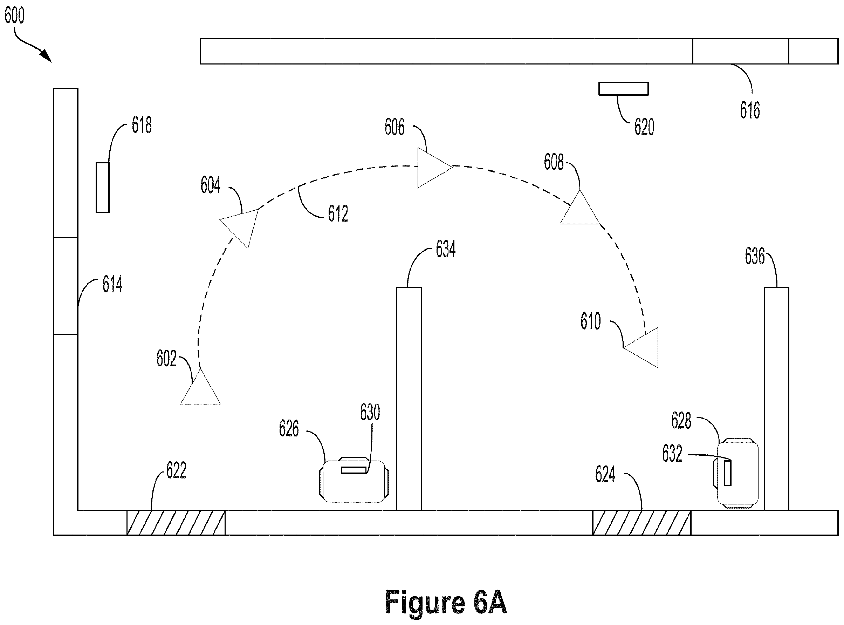

Figure 6A illustrates a robot navigating within an environment, in accordance with example embodiments. In particular, Figure 6A shows a robot at a plurality of different poses in an environment 600. The plurality of poses include a first pose 602, a second pose 604, a third pose 606, a fourth pose 608, and a fifth pose 610. The poses are connected by a path 612 that illustrates locations of the robot between each respective pose.

The environment 600 further includes a plurality of semantic landmarks of different types. A first type of semantic landmark is a door. The environment 600 includes a first door 614 and a second door 616. A second type of semantic landmark is an exit sign. The environment 600 includes a first exit sign 618 and a second exit sign 620. A third type of semantic landmark is a window. The environment 600 includes a first window 622 and a second window 624. A fourth type of semantic landmark is a waste bin. The environment 600 further includes a first waste bin 626 and a second waste bin 628. Each landmark may have different association criteria. For example, doors may have a set of association criteria that include (i) an arrangement of detected edges, and (ii) a detected handle object within the arrangement of detected edges. Exit signs may have a set of association criteria that include (i) an arrangement of detected edges, (ii) a color threshold (e.g., a threshold to identify a percentage of red pixels within the arrangement of edges), a sequence of detected letters (E - X - I - T). Association criteria may include relationships with other types of semantic landmarks. For example, the association criteria for an exit sign may also include a proximity (e.g., being within a threshold distance) between the candidate landmark and a door. Windows may have a set of association criteria that include (i) an arrangement of detected edges, and (ii) detected glass within the arrangement of edges or a detected reflective surface within the arrangement of edges. Waste bins may have a set of association criteria that includes (i) an arrangement of edges, (ii) a color threshold, (iii) and an output of an object detection operation (e.g., an output of a machine learning model used for detecting types of objects in the environment). Other types of semantic landmarks may have different association criteria. While navigating within the environment 600, the robot may attempt to classify candidate landmarks as a type of semantic landmark by testing different sets of association criteria.

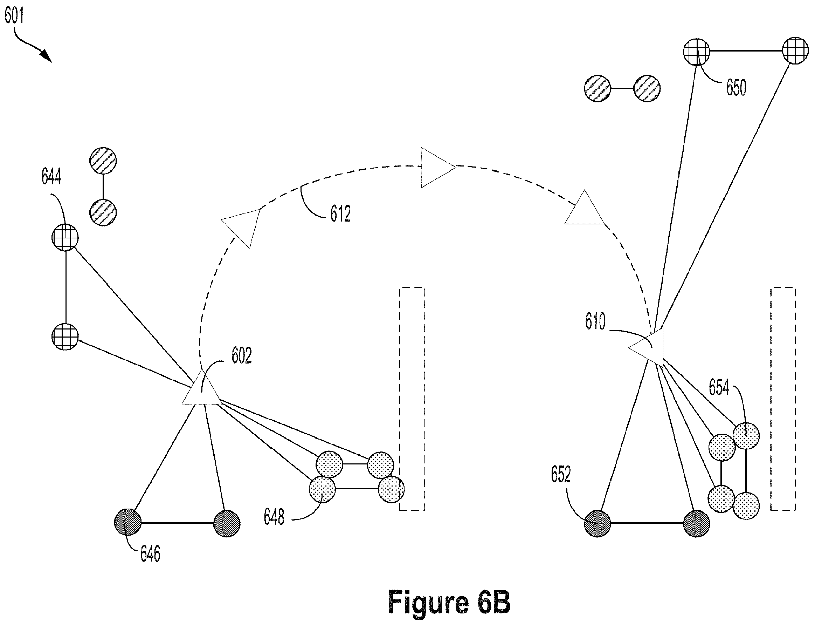

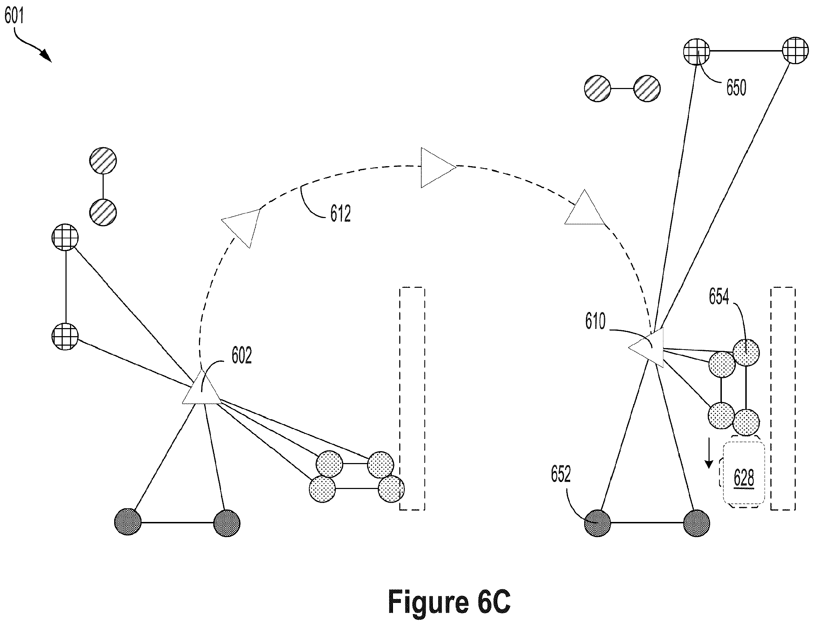

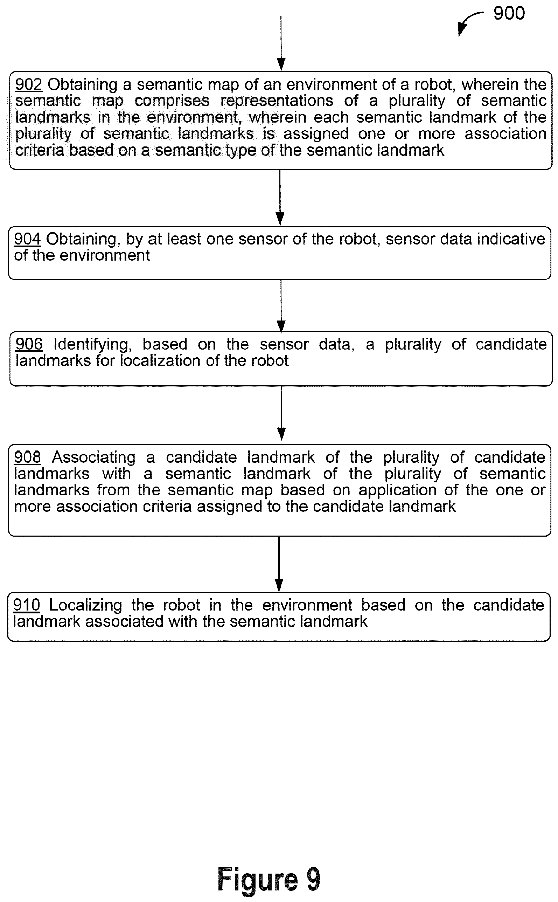

Returning to Figure 6A, at each pose the robot obtains sensor data using one or more sensors on the robot. The sensor data is passed through a SLAM module (e.g., SLAM module 510) of the robot, which matches candidate landmarks with mapped semantic landmarks. The mapped semantic landmarks are represented as nodes and edges in a map or submap of the environment 600, and the robot is localized based on an output of a graph optimization model involving a prior pose of the robot and the matching mapped landmarks in the environment 600. The robot can navigate based on localization in this manner. For example, in Figure 6A the robot takes the path 612 in order to avoid a first obstacle 634 and a second obstacle 636. Further details localizing and navigating the robot are described below with respect to Figure 6B, 6C, and 9.

Some landmarks can be detected using other methods. For example, the first waste bin 626 includes a visual identifier 630, and the second waste bin includes a visual identifier 632. As described in further detail below, visual identifiers can be used as a ground truth when adding landmarks to the map. For example, a landmark can be identified using a set of association criteria, and the association criteria can be refined until the landmark is consistently detected with the association criteria. Because the visual identifier (e.g., a QR code) is consistently detectable, a detection rate using the association criteria can be compared to a detection rate of the QR code.

Though each depicted object in Figure 6A is associated with a semantic landmark type, it should be understood that other objects may be detected in the environment. However, if an object is not matched to a semantic type because none of the association criteria apply to the object, then the object might not be considered a candidate landmark. Pre-processing objects in this manner reduces the computational burden of matching candidate landmarks with semantic landmarks in the map.

Within examples, semantic landmarks can be used for navigation planning within the environment. For example, second waste bin 628 can be used as a navigation goal, and the robot can navigate within the environment until it is positioned in front of second waste bin 628. In this manner, a mapped semantic landmark can also serve as a waypoint for navigating the robot.

Figure 6B illustrates a first semantic map of an environment, in accordance with example embodiments. In particular, Figure 6B shows a semantic map 601. In particular, Figure 6B shows a semantic map 601 that corresponds to the environment 600. As the robot follows the path 612 from first pose 602 to fifth pose 610, the robot scans the environment 600 using one or more sensors. The one or more sensors identify candidate landmarks in the environment. The robot or a computing device associated with the robot matches the candidate landmarks with one or more mapped landmarks in order to localize the robot. For example, once candidate landmarks have been associated with mapped landmarks, the pose of the robot can be inferred based on positions of the matched candidate landmarks relative to the robot.

As shown in Figure 6B, the semantic landmarks and the robot can be represented as nodes in the pose graph with connecting edges as constraints. A graph optimization model can be applied to the nodes and edges to output a sparse connected pose graph that estimates a trajectory of the robot. More specifically, the relative poses of landmarks with respect to the map frame may be stored in the semantic map. While the robot uses the map, the robot may reformat landmarks as nodes and add the nodes back to the pose graph upon detecting the landmarks.

In Figure 6B, at the first pose 602, the robot has detected the first door 614, the first window 622, and the first waste bin 626, and has respectively matched these candidate landmarks with a first semantic landmark 644, a second semantic landmark 646, and a third semantic landmark 656. Each of these semantic landmarks is associated with different association criteria. The robot may apply each set of association criteria to sensor data when detecting the candidate landmarks. For example the sensor data can be used to detect objects in the environment, each set of association criteria for a type of semantic landmark in the map can be applied to each detected object to determine if any detected objects qualify as a type of semantic landmark, and these qualified objects are compared to mapped semantic landmarks to determine whether any candidate landmark matches a mapped semantic landmark.

Each mapped landmark is represented by one or more nodes and edges. For example, the nodes (representing the center of objects, such as the robot base center or a landmark center) and edges (representing the pose difference between nodes) can be represented in a pose graph. The robot or a computing device associated with the robot may embed these nodes and edges into a graph optimization model. For example, nodes and edges of first semantic landmark 644, second semantic landmark 646, and third semantic landmark 648 are embedded into a graph optimization model. A solution to the model results in an estimated pose and trajectory of the robot. For example, the output of the graph optimization model may show that the robot is located at first pose 602, and historical data can be used to determine a trajectory of the robot. In some examples, a point cloud may additionally be aggregated in a grid format. The nodes of the pose graph (e.g., robot base nodes and/or robot sensor nodes) may be used to determine the robot pose and/or sensor pose at different timestamps, which may be used to project the point cloud into the grid.

The robot continues on path 612 until reaching fifth pose 610. At fifth pose 610, the robot detects second door 616, second window 624, and second waste bin 628. As shown in Figure 6B, these candidate landmarks are matched with a fourth semantic landmark 650, a fifth semantic landmark 652, and a sixth semantic landmark 654. Similar to the semantic landmarks matched with candidate landmarks at first pose 602, fourth semantic landmark 650, fifth semantic landmark 652, and sixth semantic landmark 654 can be used for determining fifth pose 610.

Figure 6C illustrates a second semantic map of an environment, in accordance with example embodiments. In particular, Figure 6C shows semantic map 601 with a different configuration of mapped landmarks relative to Figure 6B. For example, Figure 6C may show semantic map 601 at a prior time relative to Figures 6A and 6B. At the prior time, sixth semantic landmark 654 is positioned differently in Figure 6C. This may be because the second waste bin 628 has been repositioned. An outline of the second waste bin 628 is shown to illustrate the difference between a location of the candidate landmark and the mapped semantic landmark.

At fifth pose 610, the robot detects second door 616, second window 624, and second waste bin 628. However, the pose of second waste bin 628 does not match with sixth semantic landmark 654. In this scenario, the robot can determine its pose based on matching landmarks and not based on sixth semantic landmark 654, and may adjust a confidence level of its pose estimate because fewer mapped semantic landmarks are used to determine the pose. In addition, the robot or a computing device associated with the robot may update the map to reflect a new position for sixth semantic landmark 654.

Updating the map may involve applying a cost to the graph optimization model, which thereby determines the landmark position in the map. In this manner, the system can continue to accumulate all valid detection information even if it appears that a landmark has moved or is oriented differently. When the graph optimization model is applied to determine a sparse connected pose graph (which can occur periodically, or which may be triggered upon detection), historic data is leveraged to achieve accurate estimated positions of semantic landmarks and the robot. This can be implemented in localization contexts and in map generation or adjustment contexts to ensure both effective navigation of the robot and an accurate map of environment 600.

Within examples, mapped semantic landmarks can be categorized based on whether they represent movable or static objects. For example, windows and exit signs may be designated as stationary, so an inconsistent detection of a window or exit sign may reduce confidence in a pose estimate more than a waste bin, which is categorized as a movable object.

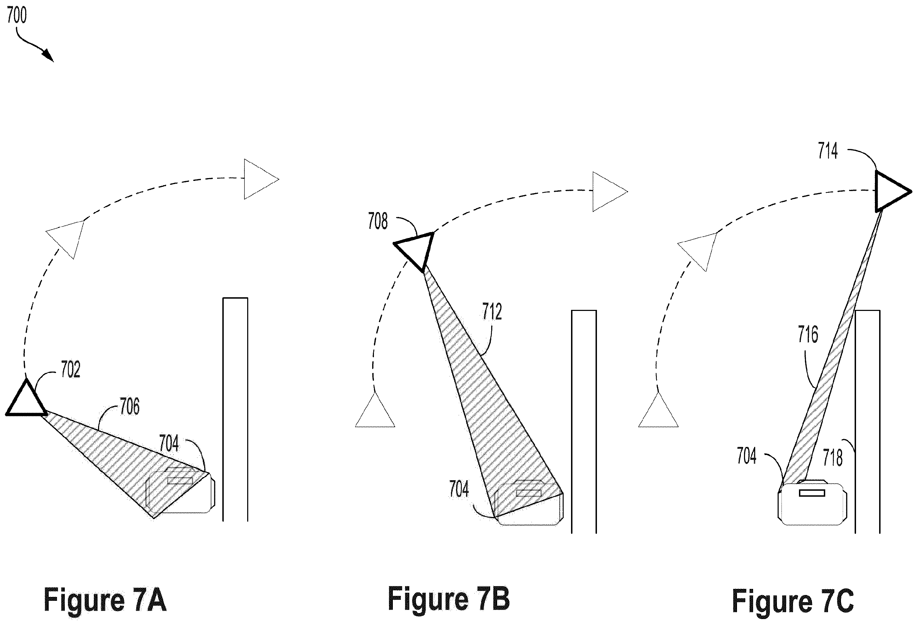

Figure 7A illustrates a robot detecting a portion of a candidate landmark at a first time, in accordance with example embodiments. In particular, Figure 7A shows a robot moving within an environment 700. At a first pose 702 of the robot, sensors of the robot have a field of view 706 of a portion of an object 704. Although only a portion of object 704 visible in field of view 706, object 704 is recognizable as a waste bin based on a set of association criteria established for the waste bin, and can be used as a candidate landmark for localizing the robot.

Figure 7B illustrates a robot detecting a portion of a candidate landmark at a second time, in accordance with example embodiments. In particular, Figure 7B shows the robot after having detected object 704 from first pose 702. At a second pose 708, a field of view 712 of the robot covers a different portion of object 704. However, object 704 may still be recognizable as a waste bin based on the association criteria for waste bins. Further, based on the odometry of the robot, previous scans of the robot, and a planned trajectory of the robot, the robot may expect to view a particular portion of object 704 at second pose 708. If the expected view closely matches (e.g., within a threshold matching level) the portion covered by field of view 712, the robot can continue to use object 704 as a candidate landmark for localizing the robot.

Figure 7C illustrates a robot detecting a portion of a candidate landmark at a third time, in accordance with example embodiments. In particular, Figure 7C shows the robot after having detected object 704 from first pose 702 and second pose 708. At a third pose 714, a field of view 716 of the robot covers a different portion of object 704. However, because field of view 716 is partially obstructed by an obstacle 718, the portion of object 704 covered by field of view 716 does not closely match an expected portion of object 704. Accordingly, the robot may stop using object 704 as a candidate landmark for localizing the robot, and may instead rely on other objects in the environment.

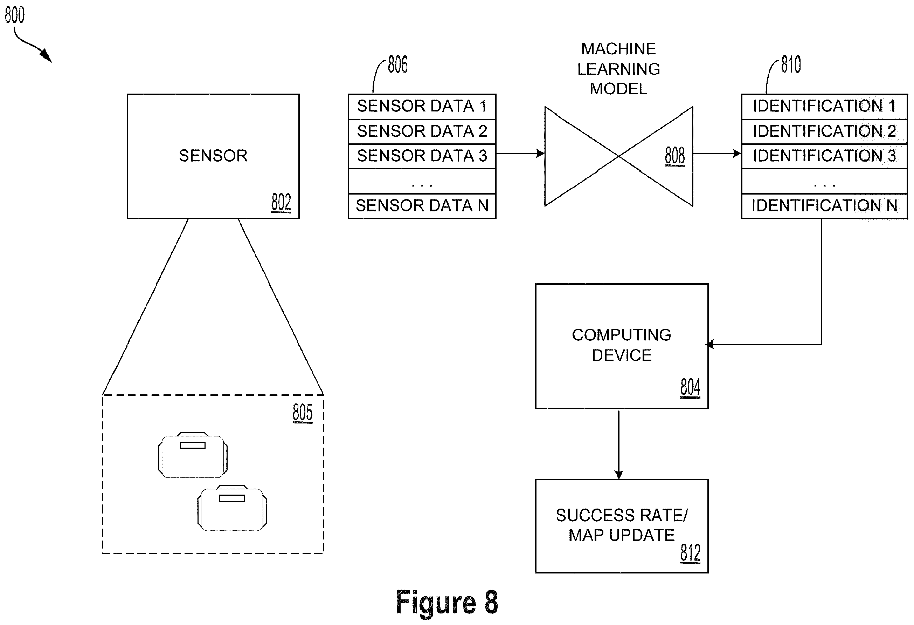

Figure 8 is a block diagram of a system training a machine learning model, in accordance with example embodiments. In particular, Figure 8 shows a system 800 with a sensor 802, a computing device 804, and a machine learning model 808. Sensor 802 is configured to obtain sensor data 806 from an environment 805 containing one or more objects. The sensor may provide the sensor data 806 over a plurality of successive scans. To one or both of computing device 804 and machine learning model 808. The machine learning model can be a supervised or unsupervised model used for identifying objects in environment 805 based on sensor data 806. For example, machine learning model 808 may be a neural network (e.g., a two-dimensional convolutional neural network) configured to automatically generate association criteria for a type of object. In other examples, association criteria can be provided to machine learning model 808 while training the model. Machine learning model 808 is configured to output identifications 810 based on sensor data 806.

Computing device 804 evaluates the identifications 810 against a ground truth. For example, a given object in environment 805 may include a visual identifier (e.g., a QR code) that computing device 804 uses as ground truth when evaluating the identifications 810. Computing device 804 then determines a success rate of identifying the object using association criteria from machine learning model 808. Once the success rate for identifying an object exceeds a threshold, computing device 804 may update a map of environment 805 to include a new semantic type of landmark, and may create a record of association criteria generated by machine learning model 808. Objects of the semantic type can thereafter be automatically added to the map.

Figure 9 is a block diagram of a method, in accordance with example embodiments. In some examples, method 900 of Figure 9 may be carried out by a control system, such as control system 118 of robotic system 100 or a computing device such as a server. For example, a central controller of a plurality of robots may carry out the functions described with respect to method 900. In further examples, method 900 may be carried by one or more processors, such as processor(s) 102, executing program instructions, such as computer-readable program instructions 106, stored in a data storage, such as data storage 104. Execution of method 900 may involve a robotic device, such as illustrated and described with respect to Figures 1-4, or another system. Other robotic devices may also be used in the performance of method 900. In further examples, some or all of the blocks of method 900 may be performed by a control system remote from the robotic device. In yet further examples, different blocks of method 900 may be performed by different control systems, located on and/or remote from a robotic device.

At block 902, method 900 includes obtaining a semantic map of an environment of a robot. For example, the semantic map may be stored in a server or in a memory of a computing device. The semantic map includes representations of a plurality of semantic landmarks in the environment. Each semantic landmark of the plurality of semantic landmarks is assigned one or more association criteria based on a semantic type of the semantic landmark. For example, a first type of semantic landmark may include a first set of criteria for matching candidate landmarks and a second type of semantic landmark may include a second, different, set of criteria for matching candidate landmarks. In some examples, a voxel or surfel grid may be stored as another layer in the map. Both landmarks and voxel/surfel grid may then be used for localization on demand.

At block 904, method 900 includes obtaining, by at least one sensor of the robot, sensor data indicative of the environment. For example, a LIDAR device, image capture device, or another sensor device can perform a scan of the environment and may transmit sensor data from the scan to a computing device.

At block 906, method 900 includes identifying, based on the sensor data, a plurality of candidate landmarks for localization of the robot. Each candidate landmark may be an object in the environment. For example, this can be performed as described above with respect to Figure 6A.

At block 908, method 900 includes associating a candidate landmark of the plurality of candidate landmarks with a semantic landmark of the plurality of semantic landmarks from the semantic map based on application of the one or more association criteria assigned to the candidate landmark. For example, a computing device may have access to a plurality of sets of association criteria, and may apply each set of association criteria to each candidate landmark to determine if a candidate landmark matches a given type of semantic landmark. One or more candidate landmarks may satisfy a set of association criteria, and thereby become associated with a semantic landmark in the semantic map.

At block 910, method 900 includes localizing the robot in the environment based on the candidate landmark associated with the semantic landmark. For example, iterative closest point (ICP) or other simultaneous localization and mapping (SLAM) techniques can be applied to infer a pose of the robot based on candidate landmarks and associated mapped semantic landmarks.

Within examples, the association criteria include one or more of: (i) a three-dimensional feature that is unique to the semantic type, (ii) a location of each landmark of the semantic type relative to other landmarks represented in the semantic map, or (iii) an orientation of each landmark of the semantic type relative to other landmarks represented in the semantic map. For example, a given object may have a unique exterior feature that is consistently recognizable by the one or more sensors of the robot, and accordingly this unique feature may be part of the association criteria. As another example, a given type of landmark (e.g., an exit sign), may consistently be positioned or oriented in a similar manner relative to other landmarks in the semantic map, and accordingly the relative location or orientation of a candidate landmark relative to other landmarks may be part of the association criteria.

Within examples, each semantic landmark of the semantic type has a substantially identical geometry to other semantic landmarks of the semantic type. For example, an exterior surface geometry of each semantic landmark may be substantially identical. In these examples, associating the candidate landmark with the semantic landmark includes matching a portion of the geometry of the candidate landmark to an expected geometry associated with the semantic type. Matching a portion of the geometry to the expected portion may allow the semantic landmarks to convey a relative direction between a candidate landmark and the robot. For example, in Figure 7A, the portion of object 704 that is covered by field of view 706 indicates an orientation and distance of the robot relative to object 704. Location and orientation information of a corresponding mapped semantic landmark may allow this single candidate landmark to give an estimate of first pose 702 of the robot.

In further examples, the same semantic type may only be required to have partial identical geometry. In particular, as long as the object center is predictable at the same localization while some geometric features are changed, the landmark may be used for localization. As an example, if the upper cover of the sorting bin is removed, the sorting bin can still be used to localize the robot. In such examples, it may be required that the robot observe a larger portion of the landmark object.

In yet further examples, a Wi-Fi router can be used as a landmark. Wi-Fi signals (e.g., encoded IP address, intensity and/or distance reports) may be used for detections and identification. The robot may therefore not be required to visually identify the landmarks using camera or lidar data. Instead, upon receiving one or more Wi-Fi signals, the robot can use the detection to refine the robot pose and/or Wi-Fi sensor pose. For this type of landmark, the shape of the landmark (e.g., the shape of the router device) can be different while still providing information for localization as long as the signal is consistently the same (e.g., it may be assumed that the router is fixedly mounted on the ceiling and will not be moved frequently). Use of these landmarks may depend on the ability to obtain sufficiently accurate measurements to enable accurate localization.

Within examples, the semantic map comprises a plurality of different semantic types. A first semantic type is associated with first association criteria including a three-dimensional geometry for use in associating candidate landmarks with semantic landmarks of the first semantic type, and a second semantic type is associated with second association criteria including point locations for use in associating candidate landmarks with semantic landmarks of the second semantic type.

Within examples, method 900 further includes tracking the candidate landmark during a plurality of scans of the sensor, determining a confidence level of associating the candidate landmark with the semantic landmark based on tracking the candidate landmark in the plurality of successive scans, determining a difference between a current location or orientation of the candidate landmark and a corresponding location or orientation of the semantic landmark in the semantic map, and updating the semantic map based on the confidence level exceeding a confidence threshold. For example, as shown in Figure 6C, second waste bin 628 is detected in a different position than a mapped position of sixth semantic landmark 654. The robot or a computing device of the robot may determine from a plurality of different poses or at least from a plurality of different scans, that the sensed position of the candidate landmark is more likely accurate than the mapped position. Accordingly, based on the confidence level exceeding a confidence threshold (e.g., 80% confidence), the robot or a computing device associated with the robot can update the map. In related examples, each successive scan is taken from a different location of the robot, the object is identified based on a portion of a geometry of the candidate object that is observable by the sensor at each location of the robot, and the portion of the geometry of the candidate landmark changes as the location of the robot changes (e.g., as shown in Figures 7A-C). In these examples, determining the confidence level is further based on observing an expected portion of the candidate landmark during each successive scan.

Within examples, method 900 further includes generating the semantic map based on composite sensor data obtained during a plurality of routes of a plurality of robots navigating within the environment. Each robot is configured to identify candidate landmarks for the semantic type based on the sensor data while navigating within the environment. For example, a computing device associated with a central controller of a plurality of robots can cause the robots to follow a plurality of routes to gather data to generate the map. In these examples, method 900 may further include training a machine learning model to identify candidate landmarks of the semantic type, determining a success rate of the machine learning model based on (i) a number of correctly identified candidate landmarks relative to a number of incorrectly identified candidate landmarks, and (ii) the number of correctly identified candidate landmarks relative to an expected number of semantic landmarks in the environment, and determining to add candidate landmarks of the semantic type to the semantic map based on the success rate of the machine learning model exceeding a threshold success rate. Each correctly identified candidate landmark may match a ground truth for the model. The ground truth can include a visual identifier placed on each candidate landmark and a preliminary map of expected locations and poses of each candidate landmark of the semantic type. In addition to being used to generate a map, the machine learning model can be used for identifying potential objects in the environment to add to the map as a new type of semantic landmark. In related examples, method 900 further includes receiving a selection of the semantic type for representation in the semantic map. The semantic type corresponds to a visual identifier. In these examples, method 900 further includes generating a preliminary map of expected locations and poses of each candidate landmark of the semantic type based on sensor data representing the visual identifier on each candidate landmark, and using sensor data representing geometries of each candidate landmark to train the machine learning model. For example, these steps may be performed as described with respect to Figure 8.

Within examples, each semantic landmark in the semantic map is represented by one or more nodes and edges embedded into a graph optimization model. In these examples, method 900 further includes updating the semantic map to include a representation of a current location and a current orientation of the associated candidate landmark by adding or adjusting one or more nodes and edges of the associated semantic landmark within the graph optimization model. In these examples, method 900 may further include generating a sparse connected pose graph based on associating the candidate landmark with the semantic landmark. The sparse connected pose graph represents a trajectory of the robot relative to the semantic landmarks. Updating the semantic map may involve applying a cost to the graph optimization model, which thereby determines the landmark position in the map. In this manner, the system can continue to accumulate all valid detection information even if it appears that a landmark has moved or is oriented differently. When the graph optimization model is applied to determine a sparse connected pose graph (which can occur periodically, or which may be triggered upon detection), historic data is leveraged to achieve accurate estimated positions of semantic landmarks and the robot. Navigating the robot within the environment can be performed based on the sparse connected pose graph.

Though the functions described with respect to method 900 generally refer to robot operations, it should be understood that similar functionality can be implemented in other navigation systems, such as vehicle systems, aviation systems, or any system that relies on mapping to automatically navigate within an environment.

### Conclusion

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the spirit or scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code or related data may be stored on any type of computer readable medium such as a storage device including a disk or hard drive or other storage medium.

The computer readable medium may also include non-transitory computer readable media such as computer-readable media that stores data for short periods of time like register memory, processor cache, and random access memory (RAM). The computer readable media may also include non-transitory computer readable media that stores program code or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software or hardware modules in the same physical device. However, other information transmissions may be between software modules or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method comprising:
obtaining a semantic map of an environment of a robot, wherein the semantic map comprises representations of a plurality of semantic landmarks in the environment, wherein each semantic landmark of the plurality of semantic landmarks is assigned one or more association criteria based on a semantic type of the semantic landmark;
obtaining, by at least one sensor of the robot, sensor data indicative of the environment;
identifying, based on the sensor data, a plurality of candidate landmarks for localization of the robot;
associating a candidate landmark of the plurality of candidate landmarks with a semantic landmark of the plurality of semantic landmarks from the semantic map based on application of the one or more association criteria assigned to the candidate landmark; and
localizing the robot in the environment based on the candidate landmark associated with the semantic landmark.

2. The method of claim 1, wherein the association criteria comprise one or more of: (i) a three-dimensional feature that is unique to the semantic type, (ii) a location of each landmark of the semantic type relative to other landmarks represented in the semantic map, or (iii) an orientation of each landmark of the semantic type relative to other landmarks represented in the semantic map.

3. The method of claim 1 or claim 2, wherein each semantic landmark of the semantic type has a substantially identical geometry to other semantic landmarks of the semantic type, wherein associating the candidate landmark with the semantic landmark comprises matching a portion of the geometry of the candidate landmark to an expected geometry associated with the semantic type.

4. The method of any one of the preceding claims, wherein the semantic map comprises a plurality of different semantic types, wherein a first semantic type is associated with first association criteria comprising a three-dimensional geometry for use in associating candidate landmarks with semantic landmarks of the first semantic type, and wherein a second semantic type is associated with second association criteria comprising point locations for use in associating candidate landmarks with semantic landmarks of the second semantic type.

5. The method of any one of the preceding claims, further comprising:
tracking the candidate landmark during a plurality of successive scans of the sensor; and
determining a confidence level of associating the candidate landmark with the semantic landmark based on tracking the candidate landmark in the plurality of successive scans;
determining a difference between a current location or orientation of the candidate landmark and a corresponding location or orientation of the semantic landmark in the semantic map; and
updating the semantic map based on the confidence level exceeding a confidence threshold.

6. The method of claim 5, wherein each successive scan is taken from a different location of the robot, wherein the candidate landmark is identified based on a portion of a geometry of the candidate landmark that is observable by the sensor at each location of the robot, wherein the portion of the geometry of the candidate landmark changes as the location of the robot changes, and wherein determining the confidence level is further based on observing an expected portion of the candidate landmark during each successive scan.

7. The method of any one of the preceding claims, further comprising:
generating the semantic map based on composite sensor data obtained during a plurality of routes of a plurality of robots navigating within the environment, wherein each robot is configured to identify candidate landmarks for the semantic type based on the sensor data while navigating within the environment.

8. The method of any one of the preceding claims, further comprising:
training a machine learning model to identify candidate landmarks of the semantic type;
determining a success rate of the machine learning model based on (i) a number of correctly identified candidate landmarks relative to a number of incorrectly identified candidate landmarks, and (ii) the number of correctly identified candidate landmarks relative to an expected number of semantic landmarks in the environment; and
determining to add candidate landmarks of the semantic type to the semantic map based on the success rate of the machine learning model exceeding a threshold success rate.

9. The method of claim 8, wherein each correctly identified candidate landmark matches a ground truth for the model, wherein the ground truth comprises a visual identifier placed on each candidate landmark and a preliminary map of expected locations and poses of each candidate landmark of the semantic type.

10. The method of claim 8 or claim 9, further comprising:
receiving a selection of the semantic type for representation in the semantic map, wherein the semantic type corresponds to a visual identifier;
generating a preliminary map of expected locations and poses of each candidate landmark of the semantic type based on sensor data representing the visual identifier on each candidate landmark; and
using sensor data representing geometries of each candidate landmark to train the machine learning model.

11. The method of any one of the preceding claims, wherein each semantic landmark in the semantic map is represented by one or more nodes and edges embedded into a graph optimization model, the method further comprising:
updating the semantic map to include a representation of a current location and a current orientation of the associated candidate landmark by adding or adjusting one or more nodes and edges of the associated semantic landmark within the graph optimization model.

12. The method of claim 11, further comprising:
generating a sparse connected pose graph based on associating the candidate landmark with the semantic landmark, wherein the sparse connected pose graph represents a trajectory of the robot relative to the semantic landmarks; and
navigating the robot within the environment based on the sparse connected pose graph.

13. A system comprising:
a sensor; and
a computing device comprising:
one or more processors;
a non-transitory computer readable medium; and
program instructions stored on the non-transitory computer readable medium and executable by the one or more processors to perform the method of any one of claims 1 to 12.

14. A non-transitory computer readable medium having stored therein instructions executable by one or more processors to cause a computing system to perform the method of any one of claims 1 to 12.
